# DEMANDE DE BREVET EUROPEEN

(11) **EP 4 775 040 A1**
(43) Date de publication de la demande: **15.07.2026**
(21) Numéro de dépôt: 25226735.6
(22) Date de dépôt: 23.12.2025
(51) Int. Cl.: A23B 9/20, A23B 2/10, A01N 59/04, A23B 7/148

(54) **PROCÉDÉ DE DÉSINSECTISATION DE PRODUITS SECS, NOTAMMENT GRAINS, CÉRÉALES, LÉGUMINEUSES OU ENCORE FRUITS, SOUS GAZ, EN AUTOCLAVE PAR MAÎTRISE DES PHASES DE PRESSION ET DE DÉPRESSION**

(30) Priorité: 14.01.2025 FR 2500366
(71) Demandeur: L'Air Liquide, Société Anonyme pour l'Etude et l'Exploitation des Procédés Georges Claude, 75007 Paris (FR)
(72) Inventeur: COUSIN, Franck, 75007 PARIS (FR); LE DRU, Pauline, 75007 PARIS (FR); IBARRA, Dominique, 75007 PARIS (FR)
(74) Mandataire: Air Liquide

(57) **Abrégé**

Un procédé de désinsectisation de produits secs, et notamment de céréales, de légumes secs, de légumineuses, ou encore d'herbes ou d'épices, selon lequel :
- on charge le produit dans un équipement de type autoclave, autoclave étant à la pression atmosphérique P1 ;
- on procède à l'injection dans l'équipement d'un gaz de traitement permettant de pressuriser l'équipement à l'aide dudit gaz jusqu'à une pression de traitement P_{T}, qui est maintenue pendant une durée de traitement ;
- on procède à une opération de dépressurisation de l'équipement jusqu'à la pression atmosphérique ;
se caractérisant en ce que ladite opération de dépressurisation comporte une phase réalisant le passage d'une pression intermédiaire à la pression atmosphérique en un temps de décroissance situé dans la gamme allant de 1 mn à 3 min, et étant préférentiellement voisin de 2 minutes, ladite pression intermédiaire étant située dans la gamme allant de 4 à 5 bar.

## Description

La présente invention concerne le domaine de la désinsectisation des produits secs. Et elle s'intéresse tout particulièrement au cas des grains, des fruits secs, des céréales, des légumes secs (légumineuses) ou encore aux herbes et épices, qui sont notoirement infestés, et doivent être traités avant leur commercialisation.

Si le bromure de méthyle est un insecticide qui a été utilisé de longue date dans cette industrie, ses dangers sont aujourd'hui largement reconnus, et son utilisation est maintenant (sauf pour quelques exceptions réellement justifiées) interdite.

D'autres techniques de désinsectisation plus respectueuses de l'environnement ont alors fait leur apparition, parmi lesquelles on peut citer les méthodes ci-après évoquées.

On sait en effet de façon générale que les insectes sont résistants, mais que certaines conditions sont nécessaires à leur survie. En dehors de la nourriture (qu'ils trouvent dans le produit sec à désinsectiser), les insectes ont besoin d'oxygène, à des taux néanmoins très bas, puisque des concentrations le plus souvent légèrement supérieures à 2 % leurs suffisent, sous réserve qu'il n'y ait pas de gaz toxique dans le reste de l'atmosphère. De même, la plage de température admissible pour la plupart des espèces se situe entre 10°C et 40°C avec un taux d'humidité admissible typiquement compris entre 30 et 95 %.

Ces différentes conditions nécessaires à la survie des insectes ont donc généré des possibilités de lutte contre leur prolifération dans différents produits alimentaires d'une manière générale.

On peut citer les traitements thermiques : de manière générale, sans autre condition défavorable, l'augmentation de la température permet de détruire les insectes. Cependant, elle peut engendrer des modifications de texture, du goût ou autres sur le produit à désinsectiser, ceci d'autant plus que la durée d'exposition nécessaire est relativement longue dans le cas de températures acceptables pour le produit, et réciproquement les températures à appliquer sont trop élevées dans le cas où le temps de traitement devrait être beaucoup plus court.

On a également proposé des traitements gazeux, à base de CO₂. La littérature sur ce sujet est très abondante. Certains de ces traitements gazeux sont pratiqués à pression atmosphérique. Le gaz carbonique à des concentrations élevées (70 à 80 %) permet un traitement sans conséquences négatives sur les produits. Cependant, la durée importante et nécessaire d'un tel traitement ne permet son utilisation que pour des produits dont la longévité est importante. En effet, en fonction de la température, il faudra typiquement entre 7 et 12 jours pour finaliser l'opération. De plus, une humidité supérieure à 65 % ou encore la présence de poussières peuvent allonger de manière significative ce temps (entre 30 % et 50 %). Ce système n'est donc en pratique envisagé que pour la désinsectisation des silos de grains où la durée de stockage est en tout état de cause importante (souvent plus d'un an).

D'autres traitements encore associent CO₂ et vide : l'utilisation de gaz carbonique à des concentrations très élevées (> 95 %) dans une enceinte quasiment sous vide (< 0.3 bar absolu) permet de réduire de manière très significative les temps de traitement, même si ceux-ci restent toujours relativement longs, typiquement de quelques dizaines d'heures.

D'autres traitements enfin associent CO₂ et haute pression, des pressions de 20 à 25 bars, voire 30 bars, sont évoqués dans la littérature, pour la désinsectisation de produits le plus souvent à forte valeur ajoutée et/ou dont la durée de conservation ne permet pas un traitement de longue durée. Entre le chargement, le déchargement et le traitement, la durée d'un cycle n'est plus que de quelques heures ce qui est très avantageux.

On peut illustrer l'art antérieur des autoclaves avec le document DE-44 10 116, qui décrit un fonctionnement où le document propose une évacuation de la chambre suivie de l'admission du gaz de traitement, à pression de traitement, et ce n'est que si la teneur en oxygène résiduel dans la chambre (qui est régulièrement mesurée) n'est plus satisfaisante que les étapes d'évacuation et de pressurisation avec le gaz de traitement sont répétées.

Et néanmoins, l'utilisation d'autoclaves pour la désinsectisation des grains sous gaz (habituellement CO₂ ou Azote) est obligée de respecter des temps de contact afin d'obtenir la mortalité attendue sur tous les stades de développements des insectes, notamment sur les formes cachées (œufs et larves) qui sont beaucoup plus résistantes. Ce qui a un impact direct sur la productivité et les coûts d'investissements associés au procédé (opex et capex).

Certes, pour répondre aux besoins de productivité, il est connu de combiner deux autoclaves, installées en parallèle, afin de récupérer la fraction de gaz restante dans le second autoclave par équilibrage des pressions. Après cet équilibrage, la fraction restante de gaz est préférentiellement éliminée par balayage gazeux et mise à l'air. Ce qui représente environ 4 à 5 bars directement rejetés à l'atmosphère.

Il est par ailleurs connu que le réchauffement climatique générant davantage de nuisances liées à des populations d'insectes, et la réglementation se durcissant sur l'usage des produits chimiques (non autorisé pour la filière Bio), les volumes de produits à traiter et leur diversité vont être de plus en plus importants, ce qui nécessite une adaptation des procédés.

Comme on le verra plus en détail dans ce qui suit, la présente invention se propose d'optimiser le temps de traitement en autoclave sous gaz (préférentiellement le CO₂ ou l'azote ou leurs mélanges , gaz qui sont ici préférés notamment pour leur coût, même si d'autres gaz peuvent être envisagés) cela grâce à une maîtrise du temps de dépressurisation (d'une pression déterminée proche typiquement et préférentiellement de 5 bars, jusqu'à la pression atmosphérique), afin d'atteindre une efficacité optimale pour, et malgré, un temps de cycle plus court ; et ce, quel que soit le stade des insectes ravageurs : œuf, larves, ou adultes.

L'efficacité du procédé proposé ici est en effet significativement avantageuse dans le cas d'une dépressurisation d'une pression choisie, comme on l'a dit préférentiellement voisine de 5 bar, à la pression atmosphérique, comparativement à une dépressurisation allant de 10 à 5 bar par exemple.

En effet, c'est le mérite de la présente invention d'avoir proposé des conditions où l'on bénéficie d'environ 5 bar non rejetés à l'atmosphère et d'avoir compris qu'une dépressurisation de 10 bar à 0 n'apporte pas plus d'effet sur les nuisibles qu'une dépressurisation d'environ 5 bar à 0 bar.

C'est notamment le mérite de la présente invention d'avoir compris l'importance de la dépressurisation et d'avoir étudié des solutions pour que cette dépressurisation soit à la fois réaliste techniquement, tout en permettant de réduire la consommation du gaz.

Comme on le verra plus loin dans la présente demande, selon un des modes de mise en œuvre de l'invention, dans cette maîtrise d'une dépressurisation d'une pression choisie, préférentiellement voisine de 5 bar, à la pression atmosphérique, on met en œuvre deux autoclaves, et l'on réalise des échanges entre un autoclave vide de gaz et l'autre qui vient d'être utilisé ( donc à une pression de traitement, pression de traitement par exemple proche de 20 bars). Plus spécifiquement, on réalise un transfert de gaz depuis l'autoclave qui vient d'être utilisé, dit autoclave No1, et l'autoclave vide de gaz, dit autoclave No2.

Selon l'invention, on ne désire pas nécessairement recycler la totalité du gaz d'un autoclave, car plus la pression est abaissée plus l'opération est onéreuse en aspiration et en compression de gaz On conçoit donc qu'il est avantageux de dépressuriser rapidement depuis une pression intermédiaire de 4 à 5 bar pour :
- une optimisation sur la consommation du gaz ;
- une optimisation sur le besoin électrique pour comprimer ;
- une efficacité sur les produits traités ;
- une réduction des risques d'explosion par élévation des poussières de grains ou autres ;
- une réduction de l'usure des composants d'installation qui pourrait se produire en liaison avec l'abrasion du gaz à des vitesses élevées .

La présente invention concerne alors un procédé de désinsectisation de produits secs, et notamment de céréales, de légumes secs, de légumineuses, ou encore d'herbes ou d'épices, selon lequel :
- on charge le produit dans un équipement de type autoclave, dit autoclave No1, l'autoclave No1 étant à la pression atmosphérique P1 ;
- on procède à l'injection dans l'autoclave No1 d'un gaz de traitement permettant de pressuriser l'autoclave No1 à l'aide dudit gaz jusqu'à une pression de traitement P_{T}, qui est maintenue pendant une durée de traitement ;
- on procède à une opération de dépressurisation de l'autoclave No1 jusqu'à la pression atmosphérique ;
se caractérisant en ce que ladite opération de dépressurisation de l'autoclave No1 comporte : i) une phase d'échange entre l'autoclave No1 qui vient d'être utilisé et qui est à la pression de traitement PT et un autoclave vide de gaz, dit autoclave No2, et ii) une phase réalisant le passage d'une pression intermédiaire à la pression atmosphérique en un temps de décroissance situé dans la gamme allant de 1 minute à 3 minutes, et étant préférentiellement voisin de 2 minutes, ladite pression intermédiaire étant située dans la gamme allant de 4 à 5 bar.

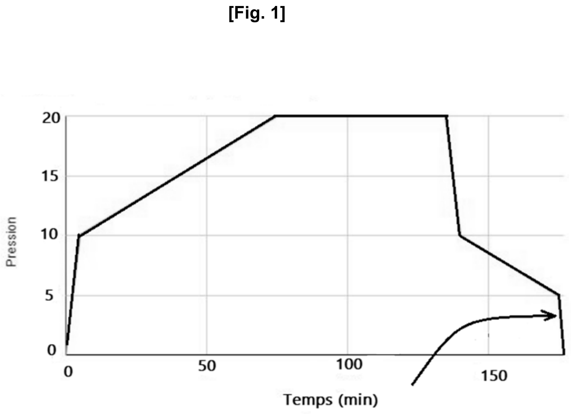

La [Figure 1] annexée illustre un exemple de courbe de pression mise en œuvre selon l'invention (variation de la pression en bars en fonction du temps écoulé en minutes), à l'aide de deux autoclaves, deux autoclaves qui sont positionnés en parallèle et tous deux en communication de fluide avec une source de gaz de traitement.

Sur cette courbe, on observe clairement une montée en pression à une pression voisine de 10 bar, un palier de traitement au voisinage de 20 bar, une phase permettant de descendre la pression de l'autoclave No1 de 20 bar à 10 bar, descente réalisée par équilibrage avec l'autoclave No2; puis une phase de dépressurisation de l'autoclave No 1 dans lequel a eu lieu le traitement, de 5 bar à la pression atmosphérique (phase pointée par la grande flèche), dernière descente réalisée en quelques minutes.

En d'autres termes et en résumé, selon un exemple de mise en œuvre de l'invention :
- la première montée pour atteindre 10 bar correspond à un équilibrage entre l'autoclave No1 et l'autoclave No2 : l'autoclave No1 est vide de gaz, l'autoclave No2 est plein. Il règne environ 20 bar dans l'autoclave No2 qui est plein suite à la réalisation dans cet autoclave No2 d'un traitement antérieur de produits ;
- après équilibrage entre les deux autoclaves, les deux équipements sont donc ramenés à 10 bar ;
- puis pour passer l'autoclave No1 qui doit traiter une charge, de 10 à 15 bar, on utilise le stockage de gaz, par exemple du CO₂, qui est a minima à 18 bar, offrant une source de pression « sans frais » ;
- tandis que pour passer ce même autoclave No1 de 15 à 20 bar, on met en œuvre par exemple un compresseur ( surpresseur ) qui aspire du gaz de l'autoclave No2 qui est à 10 bar. On va donc monter l'autoclave No1 qui doit traiter une charge à 20 bar tandis que l'autoclave No2 va être abaissé de 10 à 5 bar.

Selon un des modes de mise en œuvre de l'invention, on dispose donc de deux autoclaves No1 et No2, positionnés en parallèle, et tous deux en communication de fluide avec une source d'un gaz de traitement, et l'on procède à la mise en œuvre des mesures suivantes :
- on charge le produit à traiter dans l'autoclave No1, cet autoclave étant à la pression atmosphérique P1 ;
- on procède à l'injection dans l'autoclave No1 du gaz de traitement permettant de pressuriser l'autoclave No1 à l'aide dudit gaz jusqu'à une pression P2, P2 étant inférieure à P_{T}, l'injection permettant d'atteindre P2 étant réalisée par l'équilibrage entre l'autoclave No1 et l' autoclave No2, l'autoclave No2 étant plein à une pression égale ou voisine de P_{T} comme résultant de la réalisation dans cet autoclave No2 d'un traitement de produits antérieur, les deux autoclaves étant après cette opération d'équilibrage ramenés tous les deux à la pression P2 ;
- on passe l'autoclave No1 de la pression P2 à la pression P_{T} par la mise en œuvre de l'une ou l'autre des méthodes suivantes :
   - i) l'injection supplémentaire de gaz à partir dudit stockage permettant de passer l'autoclave No1 de la pression P2 à la pression P_{T}; ou bien
   - j) on fait passer l'autoclave No1 de la pression P2 à une pression P3 inférieure à la pression P_{T} en procédant à l'injection supplémentaire de gaz à partir dudit stockage ; puis pour passer l'autoclave No1 qui doit traiter une charge de P3 à P_{T}, on met en œuvre un moyen de compression (compresseur, surpresseur ) qui aspire du gaz de l'autoclave No2 qui est à la pression P2, la pression dans l'autoclave No2 étant ainsi ramenée au niveau de ladite pression intermédiaire située dans la gamme allant de 4 à 5 bar;
- on maintient cette pression de traitement P_{T} dans l'autoclave No1 pendant une durée de traitement ;
- on procède à la fin de ladite durée de traitement à ladite opération de dépressurisation de l'autoclave No1 jusqu'à la pression atmosphérique.

## Revendications

1. Un procédé de désinsectisation de produits secs, et notamment de céréales, de légumes secs, de légumineuses, ou encore d'herbes ou d'épices, selon lequel :
- on charge le produit dans un équipement de type autoclave, dit autoclave No1, l'autoclave No1 étant à la pression atmosphérique P1 ;
- on procède à l'injection dans l'autoclave No1 d'un gaz de traitement permettant de pressuriser l'autoclave No1 à l'aide dudit gaz jusqu'à une pression de traitement P_{T}, qui est maintenue pendant une durée de traitement ;
- on procède à une opération de dépressurisation de l'autoclave No1 jusqu'à la pression atmosphérique ;
**se caractérisant en ce que** ladite opération de dépressurisation de l'autoclave No1 comporte : i) une phase d'échange entre l'autoclave No1 qui vient d'être utilisé et qui est à la pression de traitement P_{T} et un autoclave vide de gaz, dit autoclave No2, et ii) une phase réalisant le passage d'une pression intermédiaire à la pression atmosphérique en un temps de décroissance situé dans la gamme allant de 1 minute à 3 minutes, et étant préférentiellement voisin de 2 minutes, ladite pression intermédiaire étant située dans la gamme allant de 4 à 5 bar.

2. Procédé selon la revendication 1, **se caractérisant en ce que** les deux autoclaves No1 et No2, positionnés en parallèle, sont tous deux en communication de fluide avec un stockage d'un gaz de traitement, et l'on procède à la mise en œuvre des mesures suivantes :
- on charge le produit à traiter dans l' autoclave No1, l'autoclave No1 étant à la pression atmosphérique P1;
- on procède à l'injection dans l'autoclave No1 du gaz de traitement permettant de pressuriser l'autoclave No1 à l'aide dudit gaz jusqu'à une pression P2, P2 étant inférieure à P_{T}, l'injection permettant d'atteindre P2 étant réalisée par l'équilibrage entre l'autoclave No1 et l'autoclave No2, l'autoclave No2 étant plein à une pression égale ou voisine de P_{T} comme résultant de la réalisation dans cet autoclave No2 d'un traitement de produits antérieur, les deux autoclaves étant après cette opération d'équilibrage ramenés tous les deux à la pression P2 ;
- on passe l'autoclave No1 de la pression P2 à la pression P_{T} par la mise en œuvre de l'une ou l'autre des méthodes suivantes :
- i) une injection supplémentaire de gaz à partir dudit stockage permettant de passer l'autoclave No1 de la pression P2 à la pression P_{T}; ou bien
- j) on fait passer l'autoclave No1 de la pression P2 à une pression P3 inférieure à la pression P_{T} en procédant à une injection supplémentaire de gaz à partir dudit stockage, puis pour passer l'autoclave No1 qui doit traiter une charge, de P3 à P_{T}, on met en œuvre un moyen de compression tel un compresseur, ou un surpresseur, qui aspire du gaz de l'autoclave No2 qui est à la pression P2, la pression dans l'autoclave No2 étant ainsi ramenée au niveau de ladite pression intermédiaire située dans la gamme allant de 4 à 5 bar;
- on maintient la pression de traitement P_{T} dans l'autoclave No1 pendant une durée de traitement ;
- on procède à la fin de ladite durée de traitement à ladite opération de dépressurisation de l'autoclave No1 jusqu'à la pression atmosphérique, dépressurisation qui comporte une phase réalisant le passage d'une pression intermédiaire, située dans la gamme allant de 4 à 5 bar, à la pression atmosphérique, en un temps de décroissance situé dans la gamme allant de 1 minute à 3 minutes.
